# EUROPEAN PATENT SPECIFICATION

(11) **EP 1 234 454 B1**
(45) Date of publication and mention of the grant of the patent: **22.10.2008**
(21) Application number: 00985300.3
(22) Date of filing: 01.12.2000
(51) Int. Cl.: H04Q 1/00

(54) **CHARGING IN TELECOMMUNICATION SYSTEM OFFERING BROADCAST SERVICES**
GEBÜHRENERHEBUNG IN RUNDFUNKDIENSTE ANBIETENDEM TELEKOMMUNIKATIONSSYSTEM
PROCEDE DE TAXATION DANS UN SYSTEME DE TELECOMMMUNICATION OFFRANT DES SERVICES DE RADIODIFFUSION

(30) Priority: 03.12.1999 FI 992610
(43) Date of publication of application: 28.08.2002
(73) Proprietor: MTV Corporation, 00240 Helsinki (FI); TeliaSonera Finland Oyj, 00510 Helsinki (FI)
(72) Inventor: MÄKIPÄÄ, Risto, FIN-50670 Otava (FI); HAVIA, Jorma, FIN-01300 Vantaa (FI)
(74) Representative: Kaukonen, Juha Veikko
(86) International application number: PCT/FI2000/001064
(87) International publication number: WO 2001/039576

(56) References cited:
- EP-A2- 0 877 499
- WO-A1-00/04717
- FR-A1- 2 634 963
- US-A- 5 089 885

## Description

### BACKGROUND OF THE INVENTION

The invention relates to charging telecommunication services in a telecommunication system offering broadcast services and comprising a separate reverse connection from a terminal.

New digital broadcast networks are developed all over the world for transmission of radio and television broadcasts. Said networks include for example a digital radio network DAB (Digital Audio Broadcasting) and a digital television network DVB (Digital Video Broadcasting). The DAB and DVB systems also comprise bi-directional, interactive services allowing for example charged services to be ordered or feedback information relating to a service to be sent from a network terminal. Such interactive services include for example electronic business, different games and video-on-demand services. This requires a terminal comprising means for establishing a reverse connection, i.e. data transfer towards a broadcast network. In this case the terminal is typically in a wired connection to a fixed network, such as a public switched telephone network PSTN, from which a connection to a DAB or DVB network is arranged. The reverse connection may also be arranged by means of a cable or a wireless connection, such as a wireless local area network or a mobile network.

The reverse connection allows different information, i.e. any kind of data, to be transmitted in a broadcast. The image or voice information typically transferred in broadcasts is obtained from the servers of a service provider, such as a television company. However, the reverse connection also enables communication with other telecommunication networks, such as networks linked to the Internet, and information can be selected from the other networks to the broadcast. Since the number of sub-networks and servers linked to the Internet is considerable, a user may search for very diverse information via the Internet. Compared with the capacity of wireless mobile systems in particular, the capacity of broadcasts is high, for example in terrestrial DVB transmission up to 22 Mbps per channel multiplex. This way the terminal is able to communicate with different servers via the Internet and receive data from the servers via a high-speed broadcast. Although a broadcast is concerned, the receiver can be restricted to comprise one terminal by encrypting the broadcast so that only said terminal is able to decrypt it.

In the present application, the term charging refers to measures for gathering charging data on the use of services, and measures for processing the charging data. Charging a terminal refers to charging directed to a terminal's authorized user or the subscriber paying the bill. Charging may also comprise the actual billing of the payer.

Typically charging of the broadcast services is arranged by signing a contract for a given time during which the user may receive broadcast services. For example, a broadcast service provider may give a user a smart card comprising decryption keys that work for a month. If the user wishes to receive services after that time, a new contract has to be signed. Typically, services may be used as much as is desired provided the fixed charge is paid for.

The reverse connection provider, who is typically different from the broadcast service provider, attends to the charging of the reverse connection. The broadcast service provider may be for example a broadcasting service company and the reverse connection provider a local telephone company.

The problem in the above arrangement is that the charging of broadcast services is quite inflexible, i.e. the broadcast service provider has very few charging options. A further prior art problem is that the reverse connection and the broadcast services are charged for separately.

EP-A-0877499 discloses a broadcast data receiver for use in a computer. Received audio/video signals and data are separated by a multiplexer. The audio/video signals may be converted to analog signals for audiovisual output and an IP (Internet Protocol) based transmission is arranged for the digital data stream. An accounting control section is provided in the data receiving device for accounting control in receiving chargeable data. The accounting control section will transmit accounting information generated in accordance with conditions recorded on a memory card, to a broadcasting service provider through a telephony network.

### BRIEF DESCRIPTION OF THE INVENTION

The object of the invention is to improve and diversify the charging of broadcast services. The objects of the invention are achieved with a method and a system that are characterized by what is stated in the independent claims. The preferred embodiments of the invention are disclosed in the dependent claims.

The invention is based on charging a terminal as required on the basis of a source of information transmitted in broadcasts. For this purpose, one or more service areas comprising service addresses are defined. A service address is an identifier identifying the location of a service, such as a news service or a home page, which in a preferred embodiment of the invention is an URL identifier (Uniform Resource Locator). A terminal is preferably charged when the source of information transmitted as a broadcast and selected by means of the reverse connection does not belong to the service area and, similarly, the charging of a terminal can be terminated when the source of information again belongs to the service area.Charging can be started and ended on the basis of the destination address of the reverse connection or the source address of the information transmitted as a broadcast.

According to a preferred embodiment of the invention, the reverse connection data and the information selected as a broadcast by means of the reverse connection are transferred at least logically via the same server, the transfer of the information selected by means of the reverse connection being managed in a centralized manner, allowing charging for the broadcast services to be initiated on the basis of the destination address of the reverse connection. According to still another preferred embodiment, the charging data on the reverse connection are transferred to a database including charging data on broadcast services.

An advantage of the method and system of the invention is that information transferred as a broadcast can be charged for on the basis of the source of information, in particular. A broadcast service provider is able to diversify charging by defining the source the information transferred from which is or is not charged for. For example, broadcast services may be offered without additional charge if the information to be transferred is from a server in a service provider's internal network, allowing service providers to encourage users to use their WWW portal. According to a preferred embodiment of the invention, a service provider is able to tailor the supply of interactive broadcast services to different users on the basis of user-specific service areas and other charging instructions. The information transferred can also be charged for on the basis of the amount of data transferred or the time used. A preferred embodiment of the invention allows the costs of using the reverse connection and broadcast services to be centralized to one bill.

### BRIEF DESCRIPTION OF THE FIGURES

In the following the invention will be described in greater detail by means of preferred embodiments with reference to the attached drawings, in which
Figure 1 shows a telecommunication system according to a preferred embodiment of the invention;
Figure 2 shows a telecommunication system according to a preferred embodiment of the invention, the reverse connection being arranged via an UMTS network and the broadcast services being offered by a DVB-T network;
Figure 3 shows the basis elements of a server attending to charging.

### DETAILED DESCRIPTION OF THE INVENTION

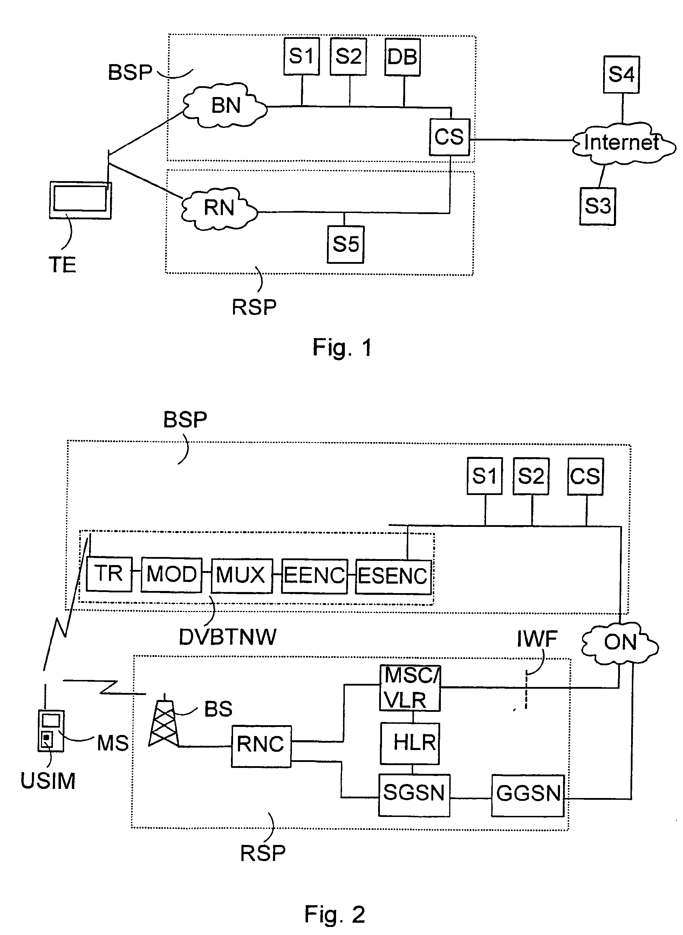

The invention is applicable to any telecommunication system comprising a network offering broadcasts to a terminal, and a network offering a reverse connection to the terminal. In the following, a preferred embodiment of the invention will be described with reference to Figure 1, in which information can be transferred to a terminal as a broadcast via the Internet.

A terminal TE receives broadcasts from a broadcast network BN. A broadcast typically comprises information on services and programs the user may select, presented by an electronic programming guide (EPG). The information is preferably displayed in the terminal TE by means of a browser type of user interface, in which different source of information are linked (cf. hyper-links in a WWW browser). The information may be divided into services not requiring the opening of a reverse connection and into services requiring the opening of a reverse connection. A reverse connection has to be opened also if a user wishes to obtain services from other sources than the network of the BSP broadcast service provider offering the broadcast services.

When a user wants to affect the broadcast services to be sent, the terminal TE can set up a reverse connection to the BSP network offering the broadcast services. The user may want a certain program to be sent or received from the BSP network, or, on the other hand, the user may want to transfer information from server S3, S4 connected to the Internet, via a high-speed broadcast. In this case the user can transfer the request to set up a reverse connection to some other network, for example a request to set up the reverse connection via the Internet to a given server on the basis of the URL identifier identifying the service.

In Internet-based networks, the IP protocol is the actual network protocol that routes addressed IP packets from a source station to a destination station. On top of the IP network protocol, a transmission protocol TCP (Transmission Control Protocol) or UDP (User Datagram Protocol) is run, both of which can be used in the system of the invention. The transmission protocol attends to the transfer of data packets from the source port to the destination port. The TCP offers applications reliable connections, i.e. the TCP places the information from the applications into IP packets, sees to it that the data arrive at the destination intact and in the right order, retransmits lost or damaged data packets and also attends to flow control. The UDP, in contrast, is a transmission protocol that is lighter than the TCP and is not responsible for the arrival or correctness of data packets, and does therefore not require an acknowledgement of the arrival of the packets. The UDP is thus an unreliable transmission protocol that lets the application program check the errors and correctness, but is better suitable for real-time services. The UDP protocol is also well suited to applications in which information desired by several users can be transferred to a receiver's memory without the need for immediate acknowledgement via the reverse connection.

The URL identifier allows the definition of the name and location of a service comprised by a server connected to the Internet, and of the protocol by means of which the service can be used. The service may be for example a WWW page or data transfer from the file path of a given IP address. The URL is able to identify the necessary protocol, such as the HTTP (HyperText Transfer Protocol), a server's host address, typically a DNS address (Domain Name System) and a file name. The actual IP address, where the service is located, is obtained on the basis of the DNS address.

A unidirectional or bi-directional link can be set up from the terminal TE via a return network RN in accordance with a contract signed with an RSP. The reverse connection may be wireless via for example a GSM network (Global System for Mobile communications) or a wireless local area network. On the other hand, the reverse connection may also be arranged via a wired network, such as a cable network, the PSTN network (Public Switched Telephone Network) or the ISDN network (Integrated Services Digital Network). The terminal TE comprises the necessary functions for setting up the reverse connection and for receiving broadcasts, preferably integrated into the same device. The identifier of the BSP network is stored in the terminal TE, for example on a smart card. In this case, when the user of the terminal TE wants to affect broadcast services, the TE forwards a request to set up a reverse connection to the BSP network.

The BSP providing broadcast services is typically a party different from the reverse connection service provider RSP. In this case the reverse connection may have to be arranged also via other networks than the return network RN (not shown). The reverse connection may be set up for example by means of a GSM terminal and the SIM card (Subscriber Identity Module) to a GSM operator's network, which, after identification of the SIM card, can set up a connection to the ISDN network of another teleoperator, from which the connection can be further set up to the BSP network. The connection to the BSP network can also be arranged via the Internet.

The BSP typically attends to the supply of broadcast services via a broadcast network BN to the terminal TE in accordance with a predetermined agreement. Since the BSP is usually also a content provider, the BSP network may comprise servers S1, S2, from which video image and voice, for example, may be transferred as a broadcast via the broadcast network BN.

Having received a connection set-up request, the BPS network preferably checks the right of the user of the terminal TE to use interactive broadcast services for example by inquiring the user identifier and password. The user can be identified by forwarding the request as a broadcast to the terminal TE and by transmitting the identifier via a reverse connection, or the identification can be entirely taken care of via a bi-directional reverse connection.

A smart card comprising the keys and algorithms assigned by the BSP for the identification can be used in user identification. Smart cards usually have separate user identification, such as the PIN (Personal Identification Number) check, allowing only a user aware of the right identifier to use the smart card. The same smart card can be used for user identifications carried out by both the RSP and the BSP. It is also feasible that user identification is carried out only once in order to provide the reverse connection and the supply of broadcast services.

If a user is entitled to affect broadcast services, the terminal TE may transfer to the BSP network an actual service request defining the service required by the user, such as a video on demand from a BSP server or the address of a WWW server. The service request may be transferred for example by an HTTP application included in the terminal TE.

The supply of interactive broadcasting services to the terminal TE is preferably controlled in a centralized manner via a server CS, which receives service requests received via the reverse connection for transferring information as a broadcast from the BSP network. Data intended for the terminal TE is also preferably transferred via the CS. The CS may also attend to user identification, modification of services according to any user service profiles, and charging.

To carry out the functions of the CS, several separate servers and databases may be used, and functions may even be distributed to different networks. For example user identification, monitoring the addresses of the data to be transferred and actual gathering and processing of charging data can be implemented in different servers.

According to a preferred embodiment of the invention, a service request received from the terminal TE is forwarded to the server CS attending to the supply of broadcast services. A service request is typically a service request transmitted by an application utilizing the TCP/IP protocol (Transmission Control Protocol/Internet Protocol) and directed to a server S1, S2 comprising an application specific to broadcast services or to an external server S3, S4. The application attending to the supply of broadcast services in the terminal may for example transmit a service request on the basis of the URL identifier for transmitting as a broadcast a video according to program data transmitted by the BSP. The CS comprises means for determining the target of the request on the basis of the service address included in the service request, and transmit the request to the destination provided the user is entitled to the service. The CS also preferably checks the charging for said service request in a manner to be described below.

If the service request is directed to a service address included in the BSP network, for example a video-on-demand service or a WWW portal page, the CS may transmit the request to the server providing the service. The BSP server may carry out the request, for example by using the URL to retrieve from its memory the video requested by the user and to be transferred as a broadcast or transfer a portal page to the terminal TE, and charge when necessary.

However, the user of the terminal TE may need to obtain information from other servers than those comprised by the BSP. If the service request is directed to the server of another network, the BSP is able to transfer the service request to the other network. If the service request is to the Internet, the CS preferably allocates to the terminal TE an IP address, on the basis of which the terminal and the service request can be identified. If a fixed IP address is defined for the terminal TE, the CS may also use it. The IP address of the terminal may also be taken into use upon user identification, and it is preferably associated with the user identifier and an encryption key according to the user data.

The CS may transfer a service request to the server according to the service address, e.g. to server S3. An Internet service request preferably comprises an URL identifier for defining the IP address. If the CS does not act as the Internet access point, it may transfer the request to the access point of a separate Internet service provider, which will transmit the request to the correct IP address.

If the connection is successfully set up in accordance with the request, information is transferred from server S3 to the IP address defined by the request, i.e. preferably to the terminal's TE dynamic IP address allocated by the CS. Since the allocated IP address belongs to the CS's address space, the server CS receives the information directed to the terminal TE. The information may include for example a WWW page or a file to be transferred by means of an FTP protocol (File Transfer Protocol) (if a TCP/IP-based data link is concerned the TCP connection has to be set up before file transfer). The BSP may transfer to the information directed to the terminal TE as a broadcast via the network BN.

According to another preferred embodiment of the invention, the information transferred as a broadcast can be charged in different ways depending on the source of the information. For this purpose, preferably one or more service areas and optionally other necessary charging instructions are defined in the network element attending to the charging.

The broadcast service provider BSP may define one or more service areas in the memory of server CS, the area preferably comprising the service addresses the information received from which is not separately charged for. When information is transferred from outside the service area, the terminal TE is charged. A service area may also comprise servers from outside the BSP, for example server S5 of the reverse connection provider RSP may belong to the service area. According to a preferred embodiment of the invention, service addresses can be defined in server CS on the basis of URL identifiers. To enable easier updating, it is preferable to define in server CS those service addresses the information transferred from which is not charged for. The fact that the charging is determined on the basis of the service address allows very accurate definition of what is to be and what is not be charged for. A single server may include services that are charged for and other services that are not charged for, whereby the BSP, when desired, may also charge for services included in the servers belonging to its network.

Furthermore, service addresses may be defined as network addresses of servers, allowing a service area to be defined to cover all services obtained from determined IP addresses. This allows the service provider BSP to offer data transfer from BSP servers free of charge, as a service included in the monthly charge, for example, but information transferred from outside the BSP is separately charged for.

The CS may preferably start and end charging on the basis of the destination address of the reverse connection or the source address of the information to be transferred as a broadcast. Generally, the destination address of the reverse connection refers to a service address included in a service request selected by the user and transferred via a reverse connection, to the network address according to which a connection is set up. The service address may be for example the URL identifier of a service included in server S3. The source address indicates the service address of the information to be transferred.

If the activation of charging is based on the destination address of the reverse connection, the CS starts to charge the terminal TE for information to be transferred as a broadcast when the destination address of the reverse connection does not belong to the service area. When the activation of the charging is based on the source address of the information, server CS defines the source address of the information to be transferred as a broadcast and charges the terminal TE if the source address does not belong to the service area. If the terminal is charged on the basis of the source address of the information, the reverse connection does not necessarily have to pass via the CS. When the CS starts to charge for information to be transferred as a broadcast, the user of the terminal TE is preferably notified of the charging and, optionally, also of the amount of the charge.

Service areas, as other charging instructions, may be defined to be the same for all users, or they may be defined user-specifically in a supply contract. If the BSP defined user-specific charging instructions, the identity obtained on the basis of user identification can be used to retrieve the stored charging instructions, on the basis of which the CS charges the terminal when necessary. Furthermore, charging groups may be created, for example three different users/terminals of the same family.

Other charging instructions may be used to define the amount of the charge. Charging instructions preferably include information on charging type, tariffs and subscribers to be charged. According to the charging type, the use of broadcast services can be charged for at least on the basis of the amount of data to be transferred or the time used. The charging instructions may also comprise different tariffs for different addresses, allowing information from different sources to be rated in different ways.

If charging is based on the amount of data transferred, the BSP comprises prior art means for calculating the amount of data to be transferred. The BSP defines user-specifically the amount of data to be transferred as a broadcast service and, in addition, defines the bill directed to the client. Charging is preferably carried out such that the user only has to pay for data coming from outside the service area. Server CS, which gathers data on the amount of data transferred and defines the charging data from the information transferred by means of the charging instructions, may preferably carry out the charging. Charging based on the amount of data may be the only reasonable way to effect charging, since the capacity of the broadcast network may vary significantly.

Since the traffic transferred in a broadcast network has to be monitored because of network management, the information on the amount of data required for charging can also be gathered as part of network management. The server monitoring the amount of data transferred may be set to gather the information on the amount of data directed to the terminal TE and to transfer it to server CS, which attends to charging. This means that additional network elements are not necessarily needed to collect information on the amount of data transferred as a broadcast. Besides information on the amount of data, information on the source address may also be transferred.

If broadcast services are charged based on time, the BSP sets a user-specific timer as the basis for charging. Charging is preferably implemented by the timer measuring the time during which network resources are used to transfer information to be charged as a broadcast. In other words, the timer is activated when information to be charged and selected by means of the reverse connection is transferred to the broadcast network BN, and the timer is removed when information directed to the user is no longer transferred to the broadcast network BN. Time-based determination of charging data can also be implemented with server CS.

When user-specific or terminal-specific charging data (based on time or the amount of data) has been generated from the information transferred as a broadcast, actual billing can be carried out. In the inventive solution, a user can be billed by any known methods, the most important of which include debiting an account, granting credit or debiting a pre-paid card.

Combining different charging data allows charging to be carried out by the user being charged both for the use of the reverse connection and for interactive broadcast services. In this case, charging data accumulating from the reverse connection are transferred at regular intervals from the reverse connection provider's network and any intermediate networks to the BSP network. A manner can be agreed upon beforehand for collecting different charging data to a user-specific database DB, on the basis of which the user is billed in a centralized manner. On the basis of the charging data, the user can be sent for example one invoice including a fixed monthly charge for broadcast services, a charge for information that was selected interactively and transferred as a broadcast, and a charge for the use of the reverse connection.

The CS preferably monitors the service address of information transferred as a broadcast in accordance with the prior description, depending on the implementation, on the basis of the source address of the information to be transferred or the destination address of the reverse connection. The terminal TE is preferably charged as long as the CS detects that the service address of the information to be transferred as a broadcast belongs to a predetermined service area. The user may initiate from the terminal TE a request for removal of charged broadcast services, thus ending the transfer of charged information and the charging of the terminal. When information is transferred from an address belonging to the service area, charging data need no longer be collected. If several service areas are determined in server CS for a user, the terminal TE is preferably not charged if the source of the information belongs to any of the service areas.

Arranging charging in accordance with the invention provides significant advantages, allowing a broadcast service provider, in particular, to control user-specifically the users' choice of services on the basis of different service areas and tariffs.

According to the invention, information can be transferred as a broadcast to the terminal TE via the network BN by any broadcast technology previously known pre se. Important broadcast standards include the DVB, DAB and ATSC (Advanced Television Systems Committee). A broadcast may further be implemented as a satellite, terrestrial or cable transmission.

Audiovisual information broadcast to the terminal TE may be packed to decrease the number of bits, saving considerably capacity in packing video images, in particular. Video information, audio information and other data can be coded in accordance with a uniform standard. IP packets may also be converted into a form according to the coding used. A transmission to the terminal TE is multiplexed with other transmissions to be transferred, coded and modulated, depending on the trail.

The terminal receiving broadcasts may be for example a Set-Top Box (STB). The STB device enables present analog TV and radio receivers to receive digital broadcasts or Internet services. The terminal TE may also be integrated into a computer by means of different PC reception cards, for example. In the terminal TE, the broadcast received is demodulated, decoded and demultiplexed. The so obtained, typically source-coded transmission can be further decoded into actual information for example by decoding the MPEG-2 coding.

The broadcast information is preferably encrypted such that only the terminal TE that has selected the information via the reverse connection is able to decrypt it. This can be implemented for example by transferring to the terminal TE the keys needed for the decryption. The keys needed for the decryption are preferably stored in a smart card, allowing the user to easily change terminals. When information is transferred to the terminal TE as a broadcast, the BSP network encrypts the information with an encryption key corresponding to the TE's decryption key.

When Internet data transfer according to the TCP/IP or UDP/IP protocols is involved, the terminal further reconstructs the IP packets and forwards them to the right applications, e.g. the FTP or HTTP applications, on the basis of port number. In addition to the encryption performed by the BSP, the information may be encrypted by a public key encryption method on application level. Since a broadcast network offers an excellent way to transfer data to a large number of terminals, the receiver of the information may also consist of a number of terminals. Data obtained from the Internet can be transferred as a broadcast by means of the IP multicast service, for example. However, in this case, charging is preferably directed to a terminal that selected the information to be transferred as a broadcast.

In the following, Figure 2 is used to illustrate, by way of example, a system where broadcast services are offered by means of a terrestrial network of the DVB system (DVB-T), and the reverse connection is arranged by means of a network according to the third generation mobile system UMTS (Universal Mobile Telecommunications System). Figure 2 only shows the UMTS and DVB-T networks in greater detail.

The UMTS network of the reverse connection provider RSP is, as far as the core network is concerned, based on the GSM/GPRS system (General Packet Radio Service). The transmitter/receiver of a terminal MS is in a bi-directional connection with the transmitter/receiver of a base station BS. The terminal also comprises a USIM application for identifying users. The UMTS radio access network RAN comprises one or more base stations BS, and a radio network controller RNC controls the radio frequencies and channels they use.

For circuit-switched services the radio network controllers RNC are linked to a mobile services switching centre MSC/VLR that attends to connection set up for circuit-switched services and routing them to the right addresses. Two databases comprising information on the users are used as assistance: a home location register HLR and a visitor location register VLR. The visitor location register VLR is typically implemented as part of the mobile services switching centre MSC/VLR. Similarly, a serving GPRS support node SGSN is available to packet-switched services and it uses the home location register HLR.

The mobile services switching centre MSC/VLR communicates via an interworking function IWF with other telecommunication networks ON, such as the ISDN network (Integrated Services Digital Network) or the PSTN network (Public Switched Telephone System). A gateway GPRS support node GGSN attends to the connections to other networks ON, such as the Internet.

To select the information to be transferred as a broadcast, the reverse connections may be set up to the network of the provider BSP of broadcast services, where, in accordance with a preferred embodiment, the CS that controls interactive broadcast services is located. The terminal MS, the mobile services switching centre MSC/VLR or the operating node SGSN may comprise settings for directing connection set-up requests to the Internet to the server CS, which can operate as an Internet access point. Information possibly selected by a user from other networks is transferred to the BSP network, which preferably comprises a charging server CS, other servers S1, S2 and the actual DVB-T network DVBTNW.

In the DVBTNW, the information to be transferred to the terminal MS, such as IP packets, is converted into a DVB data stream (ES, Elementary Stream), which is identifiable on the basis of its PID identifier (Packet Identifier) ESENC. In the DVB system, data can be transferred in many ways, as separate packets if required or as periodic transmissions as in teletext (data carousels). Different alternatives for arranging data transfer in the DVB system are described in DVB standard EN 301 192, 'DVB specification for data broadcasting', version 1.2.1.

The data stream is further error coded EEN by FEC coding (Forward Error Coding), multiplexed MUX and multi-carrier modulated MOD by OFDM modulation (Orthogonal Frequency Division Multiplex, different constellations allowed) and transferred at a transmission frequency to the trail TR. In data transfer in the DVB system, the SI frame (Service Information) of a transmission comprises service identifier data, on the basis of which the terminal MS finds the requested service from a DVB transmission. Services can be encrypted by CA encryption (Conditional Access) and, in addition, separate personal encryption is preferably also used, the key needed for decrypting which is preferably stored in a smart card. A DVB-T receiver in the terminal MS receives the broadcast and transfers the information received to the right application.

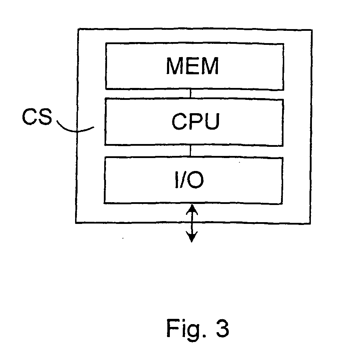

Figure 3 illustrates the basic elements of server CS attending to charging. The CS comprises at least a processor CPU, memory MEM and a bus I/O. The processor CPU constitutes the CS's actual functionality and attends to charging and other functions preferably defined for it by software, utilizing the memory MEM and the bus I/O. The CPU can store in the memory MEM particularly the service addresses belonging to a service area and other data necessary for charging, and, similarly, the CPU can retrieve from the memory MEM for example user-specific charging instructions, such as the service area, when a user wants to select broadcast services by means of the reverse connection. The CS may communicate via the bus I/O with other servers and, particularly, observe the source of the information to be transferred as a broadcast for starting or ending charging. The information to be transferred from the terminal via the reverse connection is also preferably transferred via server CS, allowing the CPU to determine the need for charging on the basis of the destination address of the reverse connection. If the final invoice is determined in server CS, the CPU may gather the data forming the basis for charging, such as the number of bits transferred and the tariff, by means of the bus I/O and the memory MEM, calculate charging data for the terminal on the basis of the data gathered from the information transferred, and store the charging data in the memory MEM. The CPU may also transfer charging data via the bus I/O to other network elements, such as the database DB.

Another way to implement the invention is to attend to the charging of the broadcast services in the network of the reverse connection provider RSP. In this case the information to be transferred as a broadcast is transferred to the return network via the element attending to the charging, from which it is further transferred to the broadcast network.

It is obvious to a person skilled in the art that, as technology advances, the inventive concept can be implemented in a variety of ways. Thus the invention and its embodiments are not limited to the above examples but may vary within the scope of the claims.

## Claims

1. A method of arranging charging in a telecommunication system comprising at least one terminal (TE), a broadcast network (BSP) offering broadcast services, and a return network (RSP) offering a reverse connection, in which method at least one terminal (TE) is arranged to select the information to be transferred as a broadcast by means of the reverse connection, **characterized by**
defining for the information to be transferred as a broadcast at least one service area comprising one or more service addresses, and
charging the terminal (TE) for the information selected by it by means of the reverse connection to be transferred as a broadcast in response to said information being from outside said at least one service area, the charging being arranged on the basis of a destination address of the reverse connection or the source address of said information.

2. A method as claimed in claim 1, **characterized by**
defining for the user of at least one terminal (TE) user-specific charging instructions comprising said at least one service area,
checking the right of the user of the terminal (TE) to use broadcast services before said information is transferred as a broadcast service,
transferring said information to the terminal (TE) as a broadcast in response to the user of the terminal (TE) having the right to use broadcast services, and
charging the terminal (TE) provided the user-specific charging instructions so determine.

3. A method as claimed in claim 1 or 2, **characterized by**
defining service addresses on the basis of URL identifiers.

4. A method as claimed in claim 1, 2 or 3, **characterized by**
transferring the information transferred from the terminal (TE) via the reverse connection and said information via a server attending to charging on the basis of said at least one service area.

5. A method as claimed in claim 4, **characterized by**
transferring charging data generated from the use of the reverse connection to a database comprising charging data on broadcast services.

6. A method as claimed in claim 4 or 5, **characterized by**
defining the destination address of the reverse connection set up from the terminal (TE), and
charging the terminal (TE) for said information in response to the destination address of the reverse connection not belonging to said at least one service area.

7. A method as claimed in any one of claims 1 to 5, **characterized by**
defining the source address of said information, and
charging the terminal for said information in response to the source address not belonging to said at least one service area.

8. A method as claimed in any one of the preceding claims, **characterized by**
charging the terminal (TE) on the basis of the time used for transferring said information.

9. A method as claimed in any one of claims 1 to 7, **characterized by**
charging the terminal (TE) on the basis of the number of bits in said information.

10. A method as claimed in any one of the preceding claims, **characterized by**
the broadcast network (BSP) offering broadcast services being a DVB-T network, and
the return network (RSP) offering the reverse connection being a wireless telecommunication system, such as the UMTS system.

11. A telecommunication system comprising at least one terminal (TE), a broadcast network (BSP) offering broadcast services, and a return network (RSP) offering a reverse connection, in which system at least one terminal (TE) is arranged to select the information to be transferred as a broadcast by means of the reverse connection, **characterized in that**
the broadcast network (BSP) or the return network (RSP) comprises at least one charging server (CS) for charging broadcast services selected by means of the reverse connection,
said charging server (CS) is arranged to define for the information to be transferred as broadcast services at least one service area comprising one or more service addresses, and
said charging server (CS) is arranged to charge the terminal (TE) for the information selected by means of the reverse connection to be transferred as a broadcast in response to said information being from outside said at least one service area, the charging being arranged on the basis of a destination address of the reverse connection or the source address of said information.

12. A telecommunication system as claimed in claim 11, **characterized in that**
said charging server (CS) is arranged to define for the user of at least one terminal (TE) user-specific charging instructions comprising said at least one service area,
the broadcast network (BSP) is arranged to check the right of the user of the terminal to use broadcast services before said information is transferred as a broadcast service,
the broadcast network (BSP) is arranged to transfer said information to the terminal as a broadcast in response to the user of the terminal having the right to use broadcast services, and
said charging server (CS) is arranged to charge the terminal provided the user-specific charging instructions so determine.

13. A telecommunication system as claimed in claim 11 or 12, **characterized in that**
the return network (RSP) is arranged to transfer the information to be transferred from the terminal (TE) via the reverse connection via said charging server (CS), and the broadcast network (BSP) is arranged to transfer said information via said charging server (CS).

14. A telecommunication system as claimed in claim 11 or 13, **characterized in that**
the return network (RSP) is arranged to transfer the charging data generated from the use of the reverse connection to a database comprising charging data on broadcast services.

15. A telecommunication system as claimed in claim 13 or 14, **characterized in that**
said charging server (CS) is arranged to define the destination address of the reverse connection set up from the terminal (TE), and
said charging server (CS) is arranged to charge the terminal (TE) for said information in response to the destination address of the reverse connection not belonging to said at least one service area.

16. A telecommunication system as claimed in any one of claims 11 to 14, **characterized in that**
said charging server (CS) is arranged to define the source address of said information, and
said charging server (CS) is arranged to charge the terminal (TE) for said information in response to the source address not belonging to said at least one service area.

17. A telecommunication system as claimed in any one of claims 11 to 16, **characterized in that**
said charging server (CS) is arranged to charge the terminal (TE) on the basis of the time used for transferring said information.

18. A telecommunication system as claimed in any one of claims 11 to 16, **characterized in that**
said charging server (CS) is arranged to charge the terminal (TE) on the basis of the number of bits in said information.

19. A telecommunication system as claimed in any one of claims 11 to 18, **characterized in that**
the broadcast network (BSP) offering broadcast services is a DVB-T network, and
the return network (RSP) offering the reverse connection is a wireless telecommunication system, such as the UMTS system.

## Patentansprüche

1. Ein Verfahren zur Gebührenerhebung in einem Telekommunikationssystem, aufweisend wenigstens ein Endgerät (TE), ein Sendenetzwerk (BSP), welches Sendedienste bietet und ein Rücksendenetzwerk (RSP), das eine Gegenverbindung bietet, wobei bei dem Verfahren wenigstens ein Endgerät (TE) die als eine Sendung zu übertragende Information mittels der Gegenverbindung zu wählen vermag, **gekennzeichnet durch**
Definieren wenigstens eines Dienstbereiches, der einen oder mehrere Dienstadressen aufweist für die als Sendung zu übertragende Information; und
Erheben einer Gebühr am Endgerät (TE) für die hiervon gewählte Information mittels der Gegenverbindung, die als Sendung in Antwort auf die Information von außerhalb des wenigstens einen Dienstbereiches zu übertragen ist, wobei die Gebührenerhebung auf der Grundlage einer Bestimmungsadresse der Gegenverbindung oder der Quellenadresse der Information aufgebaut ist.

2. Ein Verfahren nach Anspruch 1, **gekennzeichnet durch:**
Definieren von benutzerspezifischen Gebührenanweisungen für den Benutzer des wenigstens einen Endgeräts (TE), aufweisend den wenigstens einen Dienstbereich;
Überprüfen des Rechts des Benutzers des Endgeräts (TE) Sendedienste zu benutzen, bevor die Information als Sendedienst übertragen wird;
Übertragen der Information an das Endgerät (TE) als eine Sendung in Antwort darauf, dass der Benutzer des Endgeräts (TE) das Recht hat, Sendedienste zu benutzen; und
Belasten des mit den so bestimmten benutzerspezifischen Gebührenanweisungen versehenen Endgeräts (TE) mit einer Gebühr.

3. Ein Verfahren nach Anspruch 1 oder 2, **gekennzeichnet durch** die Definition von Dienstadressen auf der Grundlage von URL-Identifizierern.

4. Ein Verfahren nach Anspruch 1, 2 oder 3, **gekennzeichnet durch** Übertragen der vom Endgerät (TE) übertragene Information über die Gegenverbindung und der Information über einen Server, der an der Gebührenerhebung mitbeteiligt ist, auf der Grundlage des wenigstens einen Dienstbereichs.

5. Ein Verfahren nach Anspruch 4, **gekennzeichnet durch** Übertragung von Gebührendaten, die von der Benutzung der Gegenverbindung erzeugt wurden an eine Datenbank, aufweisend Gebührendaten an Sendediensten.

6. Ein Verfahren nach Anspruch 4 oder 5, **gekennzeichnet durch** Definieren der Bestimmungsadresse der Gegenverbindung, eingerichtet von dem Endgerät (TE) und Belasten des Endgeräts (TE) mit Gebühren für die Information in Antwort auf die Bestimmungsadresse der Gegenverbindung, die nicht zu dem wenigstens einen Dienstbereich gehört.

7. Ein Verfahren nach einem der Ansprüche 1 bis 5, **gekennzeichnet durch** Definieren der Quellenadresse der Information und Belasten der Endgeräts mit einer Gebühr für die Information in Antwort darauf, dass die Quellenadresse nicht zu dem wenigstens einen Dienstbereich gehört.

8. Ein Verfahren nach einem der vorhergehenden Ansprüche, **gekennzeichnet durch** Belasten des Endgeräts (TE) mit einer Gebühr auf der Grundlage der Zeit, die zur Übertragung der Information gebraucht wurde.

9. Ein Verfahren nach einen der Ansprüche 1 bis 7, **gekennzeichnet durch** Belasten des Endgeräts (TE) mit einer Gebühr auf der Grundlage der Anzahl von Bits in der Information.

10. Ein Verfahren nach einen der vorhergehenden Ansprüche, **gekennzeichnet dadurch, dass** das Sendenetzwerk (BSP), das Sendedienste anbietet, ein DVB-T-Netzwerk ist und das Rücksendenetzwerk (RSP), das die Gegenverbindung anbietet, ein drahtloses Telekommunikationssystem, beispielsweise das UMTS-System ist.

11. Ein Telekommunikationssystem, aufweisend wenigstens ein Endgerät (TE), ein Sendenetzwerk (BSP), das Sendedienste anbietet und ein Rücksendenetzwerk (RSP), das eine Gegenverbindung anbietet, wobei in dem System wenigstens ein Endgerät (TE) die als Sendung zu übertragende Information mittels der Gegenverbindung auszuwählen vermag, **dadurch gekennzeichnet, dass**
das Sendenetzwerk (BSP) oder das Rücksendenetzwerk (RSP) wenigstens einen Gebührenserver (CS) zur Gebührenbelastung von Sendediensten aufweist, die mittels der Gegenverbindung ausgewählt wurden;
der Gebührenserver (CS) für die als Sendedienst zu übertragende Information wenigstens einen Dienstbereich zu definieren vermag, der einen oder mehrere Dienstadressen aufweist, und
der Gebührenserver (CS) das Endgerät (TE) für die mittels der Gegenverbindung ausgewählte Information, die als Sendung zu übertragen ist, gebührenmäßig in Antwort auf die Information von außerhalb des wenigstens einen Dienstbereichs zu belasten vermag, wobei die Gebührenbelastung auf der Grundlage einer Bestimmungsadresse der Gegenverbindung oder Quellenadresse der Information aufgebaut ist.

12. Ein Telekommunikationssystem nach Anspruch 11, **dadurch gekennzeichnet, dass**
der Gebührenserver (CS) für den Benutzer wenigstens eines Endgeräts (TE) benutzerspezifische Gebührenanweisungen zu definieren vermag, welche den wenigstens einen Dienstbereich aufweisen;
das Sendenetzwerk (BSP) das Recht des Benutzers des Endgeräts zu überprüfen vermag, Sendedienste zu benutzen, bevor die Information als ein Sendedienst übertragen wird;
das Sendenetzwerk (BSP) die Information an das Endgerät als eine Sendung in Antwort daraufhin zu übertragen vermag, dass der Benutzer des Endgeräts das Recht hat, Sendedienste zu benutzen; und
der Gebührenserver (CS) das mit den benutzerspezifischen Gebührenanweisungen versehene Endgerät gebührenmäßig zu belasten vermag., vorausgesetzt die sind so bestimmt.

13. Ein Telekommunikationssystem nach Anspruch 11 oder 12, **dadurch gekennzeichnet, dass** das Rücksendenetzwerk (RSP) die über die Gegenverbindung an das Endgerät (TE) zu übertragende Information über den Gebührenserver (CS) zu übertragen vermag und dass das Sendenetzwerk (BSP) die Information über den Gebührenserver (CS) zu übertragen vermag.

14. Ein Telekommunikationssystem nach Anspruch 11 oder 13, **dadurch gekennzeichnet, dass** das Rücksendenetzwerk (RSP) die Gebührendaten, die aus der Benutzung der Gegenverbindung erzeugt werden, an eine Datenbank zu übertragen vermag, die Gebührendaten für Sendedienste aufweist.

15. Ein Telekommunikationssystem nach Anspruch 13 oder 14, **dadurch gekennzeichnet, dass**
der Gebührenserver (CS) die Bestimmungsadresse der Gegenverbindung zu definieren vermag, die von dem Endgerät (TE) aufgestellt wurde; und
der Gebührenserver (CS) das Endgerät (TE) für die Information gebührenmäßig zu belasten vermag in Antwort auf die Bestimmungsadresse der Gegenverbindung, die nicht zu dem wenigstens einen Dienstbereich gehört.

16. Ein Telekommunikationssystem nach einem der Ansprüche 11 bis 14, **dadurch gekennzeichnet, dass** der Gebührenserver (CS) die Quellenadresse der Information zu definieren vermag und das der Gebührenserver (CS) das Endgerät (TE) für die Information gebührenmäßig zu belasten vermag in Antwort auf die Quellenadresse, die nicht zu den wenigstens einen Dienstbereich gehört.

17. Ein Telekommunikationssystem nach einem der Ansprüche 11 bis 16, **dadurch gekennzeichnet, dass** der Gebührenserver (CS) das Endgerät (TE) auf der Grundlage der Zeit gebührenmäßig zu belasten vermag, die zur Übertragung der Information verwendet wird.

18. Ein Telekommunikationssystem nach einem der Ansprüche 11 bis 16, **dadurch gekennzeichnet, dass** der Gebührenserver (CS) das Endgerät (TE) auf der Grundlage der Anzahl von Bits in der Information gebührenmäßig zu belasten vermag.

19. Ein Telekommunikationssystem nach einem der Ansprüche 11 bis 18, **dadurch gekennzeichnet, dass** das Sendenetzwerk (BSP), das die Sendedienste anbietet, ein DVB-T-Netzwerk ist und dass das Rücksendenetzwerk (RSP), das die Gegenverbindung anbietet, ein drahtloses Telekommunikationssystem ist, beispielsweise das UMTS-System.

## Revendications

1. Procédé permettant la mise en place de facturation dans un système de télécommunication comprenant au moins un terminal (TE), un réseau de diffusion (BSP) proposant des services de diffusion, et un réseau de retour (RSP) permettant une connexion inversée, procédé dans lequel au moins un terminal (TE) est agencé pour sélectionner les informations destinées à être transférées sous forme d'émission au moyen de la connexion inversée, **caractérisé par** les étapes consistant à
définir, en tant qu'informations destinées à être transférées sous forme d'émission, au moins une zone de service comprenant une ou plusieurs adresses de service, et
facturer le terminal (TE) pour les informations sélectionnées par celui-ci au moyen de la connexion inversée, ces informations étant destinées à être transférées sous forme d'émission en réponse auxdites informations situées à l'extérieur de ladite au moins une zone de service, la facturation étant réalisée sur la base d'une adresse de destination de la connexion inversée ou de l'adresse source desdites informations.

2. Procédé selon la revendication 1, **caractérisé par** les étapes consistant à :
définir, pour l'utilisateur d'au moins un terminal (TE), des instructions de facturation spécifiques à l'utilisateur, comprenant ladite au moins une zone de service,
vérifier le droit de l'utilisateur du terminal (TE) à utiliser des services de diffusion avant que lesdites informations ne soient transférées sous forme de service de diffusion,
transférer lesdites informations au terminal (TE) sous forme d'émission en réponse au fait que l'utilisateur du terminal (TE) est autorisé à utiliser des services de diffusion, et
facturer le terminal (TE) dans la mesure où les instructions de facturation spécifiques à l'utilisateur le déterminent.

3. Procédé selon les revendications 1 ou 2, **caractérisé par** l'étape consistant à :
définir des adresses de service sur la base d'identifiants URL.

4. Procédé selon les revendications 1, 2 ou 3, **caractérisé par** l'étape consistant à
transférer les informations elles-mêmes transférées à partir du terminal (TE) par l'intermédiaire de la connexion inversée et lesdites informations par l'intermédiaire d'un serveur en charge de la facturation en fonction de ladite au moins une zone de service.

5. Procédé selon la revendication 4, **caractérisé par** l'étape consistant à
transférer des données de facturation générées à partir de l'utilisation de la connexion inversée, vers une base de données comprenant des données de facturation relatives à des services de diffusion.

6. Procédé selon les revendications 4 ou 5, **caractérisé par** les étapes consistant à :
définir l'adresse de destination de la connexion inversée établie à partir du terminal (TE), et
facturer le terminal (TE) pour lesdites informations en réponse à l'adresse de destination de la connexion inversée n'appartenant pas à ladite au moins une zone de service.

7. Procédé selon l'une quelconque des revendications 1 à 5, **caractérisé par** les étapes consistant à :
définir l'adresse source desdites informations, et
facturer le terminal pour lesdites informations en réponse à l'adresse source n'appartenant pas à ladite au moins une zone de service.

8. Procédé selon l'une quelconque des revendications précédentes, **caractérisé par** l'étape consistant à :
facturer le terminal (TE) sur la base de la période de temps nécessaire pour transférer lesdites informations.

9. Procédé selon l'une quelconque des revendications 1 à 7, **caractérisé par** l'étape consistant à :
facturer le terminal (TE) sur la base du nombre de bits compris dans lesdites informations.

10. Procédé selon l'une quelconque des revendications précédentes, **caractérisé en ce que**
le réseau de diffusion (BSP) proposant des services de diffusion est un réseau DVB-T, et
le réseau de retour (RSP) permettant la connexion inversée est un système de télécommunication sans fil, tel que le système UMTS.

11. Système de télécommunication comprenant au moins un terminal (TE), un réseau de diffusion (BSP) proposant des services de diffusion et un réseau de retour (RSP) permettant une connexion inversée, système dans lequel au moins un terminal (TE) est agencé pour sélectionner les informations destinées à être transférées sous forme d'émission au moyen de la connexion inversée, **caractérisé en ce que :**
le réseau de diffusion (BSP) ou le réseau de retour (RSP) comprend au moins un serveur de facturation (CS) pour la facturation de services de diffusion sélectionnés au moyen de la connexion inversée,
ledit serveur de facturation (CS) est agencé pour définir au moins une zone de service comprenant une ou plusieurs adresses de service pour les informations destinées à être transférées sous forme de services de diffusion, et
ledit serveur de facturation (CS) est agencé pour facturer le terminal (TE) pour les informations sélectionnées au moyen de la connexion inversée, ces informations étant destinées à être transférées sous forme d'émission en réponse auxdites informations étant situées à l'extérieur de ladite au moins une zone de service, la facturation étant réalisée sur la base d'une adresse de destination de la connexion inversée ou de l'adresse source desdites informations.

12. Système de télécommunication selon la revendication 11, **caractérisé en ce que :**
ledit serveur de facturation (CS) est agencé pour définir des instructions de facturation spécifiques à l'utilisateur comprenant au moins une zone de service, pour l'utilisateur d'au moins un terminal (TE),
le réseau de diffusion (BSP) est agencé pour vérifier le droit de l'utilisateur du terminal d'utiliser des services de diffusion avant que lesdites informations ne soient transférées sous forme de service de diffusion,
le réseau de diffusion (BSP) est agencé pour transférer lesdites informations au terminal sous forme d'émission en réponse à l'utilisateur du terminal étant autorisé à utiliser les services de diffusion, et
ledit serveur de facturation (CS) est agencé pour facturer le terminal dans la mesure où les instructions de facturation spécifiques à l'utilisateur le déterminent.

13. Système de télécommunication selon les revendications 11 ou 12, **caractérisé en ce que :**
le réseau de retour (RSP) est agencé pour transférer les informations destinées à être transférées à partir du terminal (TE) par l'intermédiaire de la connexion inversée et par l'intermédiaire dudit serveur de facturation (CS), et **en ce que** le réseau de diffusion (BSP) est agencé pour transférer lesdites informations par l'intermédiaire dudit serveur de facturation (CS).

14. Un système de télécommunication selon les revendications 11 ou 13, **caractérisé en ce que :**
le réseau de retour (RSP) est agencé pour transférer les données de facturation générées à partir de l'utilisation de la connexion inversée, vers une base de données comprenant des données de facturation relatives à des services de diffusion.

15. Un système de télécommunication selon les revendications 13 ou 14, **caractérisé en ce que :**
ledit serveur de facturation (CS) est agencé pour définir l'adresse de destination de la connexion inversée établie à partir du terminal (TE), et
ledit serveur de facturation (CS) est agencé pour facturer le terminal (TE) pour lesdites informations en réponse à l'adresse de destination de la connexion inversée n'appartenant pas à ladite au moins une zone de service.

16. Un système de télécommunication selon l'une quelconque des revendications 11 à 14, **caractérisé en ce que :**
ledit serveur de facturation (CS) est agencé pour définir l'adresse source desdites informations, et
ledit serveur de facturation (CS) est agencé pour facturer le terminal (TE) pour lesdites informations en réponse à l'adresse source n'appartenant pas à ladite au moins une zone de service.

17. Un système de télécommunication selon l'une quelconque des revendications 11 à 16, **caractérisé en ce que :**
ledit serveur de facturation (CS) est agencé pour facturer le terminal (TE) sur la base de la période de temps nécessaire pour transférer lesdites informations.

18. Un système de télécommunication selon l'une quelconque des revendications 11 à 16, **caractérisé en ce que :**
ledit serveur de facturation (CS) est agencé pour facturer le terminal (TE) sur la base du nombre de bits compris dans lesdites informations.

19. Un système de télécommunication selon l'une quelconque des revendications 11 à 18, **caractérisé en ce que :**
le réseau de diffusion (BSP) proposant des services de diffusion est un réseau DVBT, et
le réseau de retour (RSP) permettant la connexion inversée est un système de télécommunication sans fil, tel que le système UMTS.
